(19) Europäisches Patentamt
European Patent Office
Office européen des brevets

(11) **EP 2 360 131 B1**

(12) **EUROPEAN PATENT SPECIFICATION**

(45) Date of publication and mention
of the grant of the patent:
**30.05.2018 Bulletin 2018/22**

(51) Int Cl.:
**C04B 35/622** (2006.01)  **C03C 13/00** (2006.01)
**C03C 3/093** (2006.01)

(21) Application number: **10004591.3**

(22) Date of filing: **30.04.2010**

(54) **Composition for preparing ceramic fibers and biosoluble ceramic fibers prepared therefrom for heat insulating material at high temperature**

Zusammensetzung für die Herstellung von keramischen Fasern und daraus hergestellte biolösbare keramische Fasern für wärmedämmendes Material bei Hochtemperaturen

Composition pour la production de fibres céramiques et fibres céramiques biosolubles préparées avec cette composition pour un matériau isolant à haute température.

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.02.2010 KR 20100016616**

(43) Date of publication of application:
**24.08.2011 Bulletin 2011/34**

(73) Proprietor: **Kcc Corporation**
**Seocho-ku**
**Seoul 137-855 (KR)**

(72) Inventors:
• **Lee, Jin Hyuk**
 **446-527 Yongin City (KR)**
• **Seog, In Sig**
 **Giheung-gu**
 **446-505 Yongin City (KR)**

• **Lee, Jeung Je**
 **Baeksong-maeul 571-3**
 **420-811 Bucheon City (KR)**
• **Jung, Won Sik**
 **Poongdeokcheon-dong**
 **448-170 Yongin (KR)**

(74) Representative: **Kador & Partner**
**Corneliusstraße 15**
**80469 München (DE)**

(56) References cited:
**EP-A1- 1 939 148**    **EP-A2- 1 323 687**
**WO-A1-94/15883**    **WO-A1-2007/086677**
**CN-A- 1 544 371**    **US-A1- 2003 162 019**
**US-A1- 2009 042 030**

**Description**

**[TECHNICAL FIELD]**

The present invention relates to a composition for preparing ceramic fiber and a biosoluble ceramic fiber prepared therefrom for heat insulating material at high temperature, more specifically, a composition for preparing ceramic fiber comprising $SiO_2$ as a network-forming oxide, CaO and MgO as modifier oxides, and $ZrO_2$, $Al_2O_3$ and $B_2O_3$ as intermediate oxides with appropriate ratios, which improves the solubility of the ceramic fiber in artificial body fluid; shows good thermal/mechanical properties such as heart resistance, high-temperature viscosity, compressive strength and restoration when used at a high temperature of 1260°C; and provides an economic effect that a ceramic fiber can be prepared easily by using the existing facilities, and a biosoluble ceramic fiber prepared therefrom for heat insulating material at high temperature.

**[BACKGROUND ART]**

In general, ceramic fibers are used as a raw material of lagging materials, cold-insulating materials, heat-insulating materials, sound-proofing materials, sound-absorbing materials, filtering materials and the like because they have low thermal conductivity, and are thin and long in shape.

The term of "refractory heat-insulating material" usually refers to a refractory fiber that can be used at a temperature higher than that of the conventional mineral wool. In accordance with ASTM C892, fiber-phase blanket heat-insulating materials for the high temperature-application are classified as Type 1 (732°C) to Type 5 (1649°C). The safe use temperature of fiber is ordinarily defined as a temperature having a thermal linear shrinkage of 3% or less (or 5% or less) when retaining the fiber at the relevant temperature for 24 hours.

The refractory heat-insulating material which is most generally used now is $Al_2O_3$-$SiO_2$(RCF-AS)-based fibers, and the safe-use temperature thereof is in the range of 1100-1260 °C. The following literature can be exemplified as prior technologies regarding the $Al_2O_3$-$SiO_2$(RCF-AS)-based fibers.

U.S. Patent Nos. 2,873,197 and 4,555,492 disclose an $Al_2O_3$-$SiO_2$(RCF-AS)-based fiber in which a certain amount of $ZrO_2$ component is added to $Al_2O_3$-$SiO_2$-based composition, and said patents states that the safe-use temperature of the fibers disclosed therein has been increased to 1430 °C. U.S. Patent No. 4,055,434 discloses a fiber composition in which at most 16% of burned dolomite, as a raw material of CaO and MgO, is added to $Al_2O_3$-$SiO_2$-based composition, said fiber having a heat-resistant temperature of 760-1100 °C. U.S. Patent No. 3,687,850 describes a silica fiber containing 76-90% of $SiO_2$ and 4-8% of $Al_2O_3$ as prepared by adding an acid to a fiber composition consisting of $SiO_2$, $Al_2O_3$, $R_2O$ (alkali metal oxide), RO (alkali-earth metal oxide) and $B_2O_3$ and then dissolving RO, $R_2O$ and $B_2O_3$ therein, said silica fiber having a heat resistance of 1093 °C without the precipitation of any crystalline material.

Although the fiber compositions for the preparation of refractory heat-insulating material has been deduced in light of the heat resistance and the dissolving property to acids, however, they do not pertain to the dissolving property to a salts solution as an artificial body fluid. Furthermore, said fibers can result in a low-solubility problem in a physiological medium because their content of $Al_2O_3$ exceeds 4%.

According to the recent research materials, it has been reported that, if the crushing pieces of fibers having low solubility in a physiological medium are inhaled and accumulated into the lungs through respiration, it could injure a person's health. Research on the inorganic fiber composition for satisfying the requirements of high-temperature physical property while simultaneously minimizing the possibility of harm to the human body by way of increasing the solubility in a physiological medium is actively proceeding, and examples of the fiber glass composition as developed according to above include the following:

Bioabsorbable Fiber Glass Composition containing $CaF_2$, ZnO, SrO, $Na_2O$, $K_2O$, $Li_2O$, etc. in addition to CaO and $P_2O_5$ [U.S. Patent No. 4,604,097]; Fiber Composition in which $P_2O_5$ and the like are added to a conventional soda-lime borosilicate [International Publication No. WO 92/07801]; and Fiber Composition which is formed by increasing the amount of $P_2O_5$ in the soda-lime borosilicate and adding $Na_2O$ and the like thereto [U.S. Patent No. 5,055,428].

However, said compositions are limited in that it is impossible to use them as a biodegradable material at a high temperature of 1000°C or higher because: the fibers produced therefrom have low heat resistance since the compositions contain a relatively large amount of $R_2O$ component; they are nothing but an architectural heat-insulating material applicable at a maximum temperature of 350°C or less in light of having no description of its safe use temperature. EP 1 939 148 A1 describes a refractory alkaline earth silicate fiber with a composition comprising: $75 < SiO_2 < 86$ wt% ; MgO < 10 wt% ; $13.8 < CaO < 27.8$ wt% ; $Al_2O_3 < 2$ wt% ; $ZrO_2 < 3$ wt% ; $B_2O_3 < 5$ wt% ; $P_2O_5 < 5$ wt% ; where 75 wt% $< SiO_2 + ZrO_2 + B_2O_3 + 5*P_2O_5$ ; 95 wt% $< SiO_2 + CaO + MgO + Al_2O_3 + ZrO_2 + B_2O_3 + P_2O_5$ and $M_2O > 0.2$ wt % in which M is alkali metal.

US 2003/162019 A1 describes a low-shrinkage, high temperature resistant inorganic fiber with a composition comprising: 71,25 - 80 wt% silica, 0 - 20 wt% magnesia, 5 - 28 wt% calcia, 0-5 wt% zirconia. Meanwhile, as a method of fiberizing ceramic fiber composition, a blowing method in which the composition is fiberized by compressed air or compressed steam, and a spinning method in which the composition is fiberized by dropping melt material into a cylinder rotating at a high speed are well known in this technical field. The ideal viscosity of the composition, which is suitable for fiberizing it according to the spinning method or the blowing method, should be low at a range of 20-100 poises, or be similar to that of the conventional $SiO_2$-$Al_2O_3$-based composition without any great deviation. If the viscosity of the fiber is too high at the fiberizing temperature, the diameter thereof becomes larger at the same time the amount of the thick unfiberized shot is increased, whereas, if the viscosity of the fiber is too low, the fiber becomes shorter and thinner and the amount of fine unfiberized shot is increased. In general, the viscosity of the molten glass depends on the composition and temperature of the glass. In view of the above, it is necessary to design the optimal composition for retaining the optimal fiberizing viscosity; and the fiberizing composition having the high viscosity has to effectuate it at a higher temperature. Therefore, it is required to stay within a suitable range of viscosity in the vicinity of the fiberizing temperature.

Furthermore, the ceramic fiber which is used for the purpose of heat insulating at a high temperature is required to have high heat resistance as well as excellent endurance against repetitive thermal stress long dash for example, raw material of a furnace. In the ceramic fiber, its use temperature is related to shrinkage at the relevant temperature. Shrinkage of the fiber article is influenced by a viscosity of the glassy fiber composition at a high temperature, a type or amount of the crystal forming and growing due to heat exposure during the life of the article, a crystal precipitation temperature and a viscosity of the glassy material remaining after the crystal is precipitated. Because the high temperature-precipitating crystal has a specific gravity higher than that of the glassy fiber, the stress is caused by the precipitation and growth of the crystal at its interface, and the fiber can be cut or modified by the resulting stress, thereby shrinking it. If the fiber exists in a glassy phase without precipitating any crystal, the viscosity of such a fiber-for example, glass-is gradually lower at a relatively low temperature, and therefore, its shrinkage is increased. Accordingly, the fiber comprised of a composition having low shrinkage at high temperature is required to have the precipitation amount, precipitation velocity and precipitation temperature suitable for precipitating crystal. Also, the variation of the solubility in artificial body fluid must be as small as possible. Therefore, it is important to choose a composition that has low-heat linear shrinkage at high temperature and is easier to melt and fiberize, as well as having high solubility in an artificial body fluid.

In addition, although such materials as glass wool, mineral wool and ceramic fiber have dissolving property in an artificial body fluid better than that of which has been proven to be asbestos, harmful to human body, it has not been yet found whether or not they are harmful to the human body. It is reported that the fiber having a solubility constant of at least 100 ng/cm$^2$·hr does not result in any fibrosis or tumor in an animal inhalation test, even though it became known as having a specific correlation between the solubility of the fiber in an artificial body fluid and the harmfulness in an animal test, in accordance with the toxicological testing result through an animal test [Inhalation Toxicology, 12:26□280, 2000, Estimating in vitro glass fiber dissolution rate from composition, Walter Eastes]. In the test of biodegradability actually using an artificial body fluid, values of $K_{dis}$ have the maximum error of ±30%, and thus it can be called a biodegradable fiber when the fiber has $K_{dis}$ of at least 150 ng/cm$^2$·hr, more preferably at least 200 ng/cm$^2$·hr.

**[PRIOR ART PUBLICATIONS]**

**[PATENT PUBLICATIONS]**

U.S. Patent No. 2,873,197
U.S. Patent No. 4,555,492
U.S. Patent No. 4,055,434
U.S. Patent No. 3,687,850
U.S. Patent No. 4,604,097
U.S. Patent No. 5,055,428
International Publication No. WO 92/07801

**[NON-PATENT PUBLICATIONS]**

Inhalation Toxicology, 12:26□280, 2000, Estimating in vitro glass fiber dissolution rate from composition, Walter Eastes

**[CONTENTS OF THE INVENTION]**

**[PURPOSE OF THE INVENTION]**

The present invention seeks to solve the problems of the prior arts as explained above. Therefore, the purpose of the present invention is to provide a novel ceramic fiber composition which maintains a high-silica region of $SiO_2$ content of 75 wt% or more in a $CaO$-$MgO$-$ZrO_2$-$SiO_2$-based composition system and shows a good fiberization yield, a low thermal conductivity, a low thermal linear shrinkage of 3% or less even at 1260°C for 24 hours and an excellent biodegradability with a solubility constant in artificial body fluid of 200 ng/cm$^2$·hr or higher.

**[CONSTITUTION OF THE INVENTION]**

To achieve the above purpose, the present invention provides a composition for preparing a biosoluble ceramic fiber for heat insulating material at high temperature, comprising 75-80 wt% of $SiO_2$, 10-12 wt% of $CaO$, 4-9 wt% of $MgO$, 0.1-2 wt% of $ZrO_2$, 0.7-1.5 wt% of $Al_2O_3$ and 0.1-1.5 wt% of $B_2O_3$.

Another aspect of the present invention provides a biosoluble ceramic fiber for heat insulating material at high temperature which is prepared from the composition for preparing a ceramic fiber according to the present invention and satisfies one or more of the properties of 1) an unfiberized shot content of 50 wt% or less [e.g., from 0.01 or less to 50 wt%], 2) an average fiber diameter of 6 μm or less [e.g., from 2 to 6 μm], 3) a thermal linear shrinkage (1260°C/for 24 hours) of 3% or less [e.g., from 0.001 or less to 3%] and 4) a solubility constant in artificial body fluid of 200 ng/cm$^2$·hr or more [e.g. from 200 to 1000 ng/cm$^2$·hr or more].

The composition for preparing a ceramic fiber of the present invention decreases the content of $Al_2O_3$ to a proper level and increases the contents of modifier oxides in a ceramic fiber composition system for heat insulating material at high temperature, thereby remarkably increasing the solubility of the ceramic fiber in artificial body fluid. In addition, the lowering of heat resistance according to the decrease of $Al_2O_3$ content is overcome by the addition of $ZrO_2$, a eutectic region which can be generated amid the existence of three components of $SiO_2$-$Al_2O_3$-$CaO$ is suppressed by controlling the contents of $CaO$ and $Al_2O_3$, and the decrease of biodegradability of the ceramic fiber according to the decrease of $CaO$ content is suppressed by the addition of $B_2O_3$.

The composition for preparing a biodegradable ceramic fiber according to the present invention is explained hereinafter in more detail, according to its constitutional components.

$SiO_2$ is a main component of ceramic fiber and is contained in an amount of 75-80 wt%, preferably 76-78 wt%, based on the total weight of the composition. If the content of $SiO_2$ is less than 75 wt%, the contents of $CaO$ and $MgO$ should relatively increase to improve the biodegradability, which results in the problems that the cost for raw material increases, the fiber length becomes too short and thus the stiffness increases, unfiberized shot content increases and thus the fiberization becomes difficult, and the thermal shrinkage increases and thus properties deteriorate. In contrast, if the content of $SiO_2$ exceeds 80 wt%, there are drawbacks such that the melting of the composition is difficult, and the fiberization viscosity is elevated and thus the diameter of the fiber produced becomes large and at the same time, many thick unfiberized shots are generated.

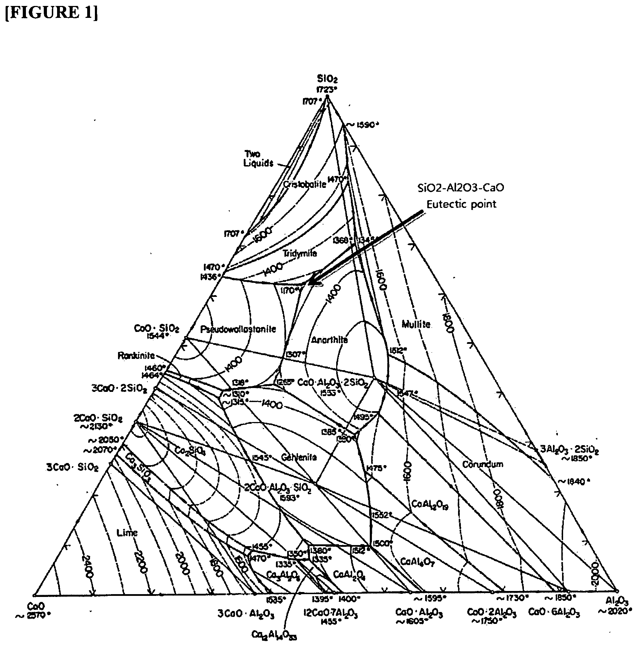

$CaO$ is a modifier oxide to increase the solubility of the produced fiber in body fluid and contained in an amount of 10-12 wt% based on the total weight of the composition. If the content of $CaO$ is less than 10 wt%, the solubility of the fiber in body fluid decreases. In contrast, if the content of $CaO$ exceeds 14 wt%, the amount of crystallite precipitated during fiber production increases and thus the $SiO_2$ content in the produced fiber relatively decreases, thereby causing problems in the thermal stability and the increase of thermal linear shrinkage at high temperature. Furthermore, when the three components of $SiO_2$-$Al_2O_3$-$CaO$ exist, a eutectic point can be generated in a eutectic region and the melting may occur at about 1170°C (see Fig. 1). If the composition part of such a eutectic region exists during the melting procedure of ceramic fiber, the required heat resistance cannot be satisfied and a lowering of heat resistance and heat retention caused by rapid fiber deterioration also occurs. In the present invention, such problems of a eutectic region are solved by controlling the sum of the contents of $CaO$ and $Al_2O_3$ to 10.5-15.5 wt%, preferably 11-15 wt%.

$MgO$ is another modifier oxide to improve the solubility of the produced fiber in body fluid and contained in an amount of 4-9 wt%, preferably 5-7 wt%, based on the total weight of the composition. If the content of $MgO$ is less than 4 wt%, the biodegradability of the fiber in body fluid decreases or the effect of inhibiting the growth of fiber crystallite during fiber production decreases. In contrast, if the content of $MgO$ exceeds 9 wt%, the eutectic point region becomes close to those of diopside and wollastonite and thus the fiberization viscosity increases and the fiber melting temperature becomes lower. In the present invention, as the component of $MgO$, raw materials such as dolomite and limestone which are commercially available at relatively low costs may be used instead of a pure compound.

$Al_2O_3$ is added as an intermediate oxide to perform the function of cutting the bonding structure of $SiO_2$ during the melting procedure at high temperature and to control the viscosity properly for preparing ceramic fiber. $Al_2O_3$ is contained in an amount of 0.7-1.5 wt%, preferably 0.7-1.2 wt%, based on the total weight of the composition. If the

content of $Al_2O_3$ is less than 0.5 wt%, the effect of controlling viscosity at high temperature becomes lower. In contrast, if the content of $Al_2O_3$ exceeds 1.5 wt%, the solubility of the fiber in body fluid decreases and at the same time, the heat-resistant temperature becomes lower.

$ZrO_2$ is added to prevent the problems of lowering thermal stability at high temperature and chemical durability, which may be caused by the decrease of the content of $Al_2O_3$, and contained in an amount of 0.1-2 wt%, preferably 0.6-1.5 wt%, based on the total weight of the composition. If the content of $ZrO_2$ is less than 0.1 wt%, the thermal stability at high temperature and chemical durability become lower. In contrast, if the content of $ZrO_2$ exceeds 2 wt%, the solubility of fiber in body fluid decreases severely.

$B_2O_3$ is an oxide forming a glass with a low melting point and added as a fiberization aid to further improve the solubility of the produced fiber in an artificial body fluid. $B_2O_3$ is contained in an amount of 0.1-1.5 wt%, preferably 0.7-1.3 wt%, based on the total weight of the composition. If the content of $B_2O_3$ is less than 0.1 wt%, the solubility in an artificial body fluid becomes lower and accordingly the biodegradability in a body fluid decreases. In contrast, if the content of $B_2O_3$ exceeds 1.5 wt%, the heat resistance becomes deteriorated upon long-term exposure to high temperature and thus the high-temperature shrinkage increases. $B_2O_3$ is preferably added in case of producing the fiber with an increased $SiO_2$ content for the following reason: In case of high content of $SiO_2$, the viscosity of the composition becomes higher according to the increase of the $SiO_2$ content, thereby lowering the yield of the fiber. However, the addition of $B_2O_3$ can solve the problems of the lowering of fiber yield and the decrease of solubility in an artificial body fluid. Furthermore, a side effect of fiber solubility decrease in body fluid at room temperature, which may occur when the $Al_2O_3$ content is increased to control the viscosity at high temperature, can be overcome by the proper use of $B_2O_3$.

In addition, the composition for preparing a ceramic fiber according to the present invention may contain impurities such as $Na_2O$, $K_2O$, $TiO_2$ and $Fe_2O_3$, depending on the raw materials used. However, if their content is maintained to a level of 1 wt% or less based on the total weight of the composition, the properties of the produced fiber are not deteriorated by the impurities.

There is no particular limitation to the methods for preparing the composition for preparing a ceramic fiber according to the present invention. Thus, conventional methods for preparing ceramic fiber compositions are available by using the aforementioned components with the aforementioned amount ranges. For example, methods such as electrical melting process may be used but not limited thereto.

Concretely, a melting process of electrically charging type using three-phase electrodes may be employed to prepare the composition for preparing a ceramic fiber. The materials of the electrode and the outlet may consist of molybdenum. By such a melting process, electric-resistant heating is induced, through which a high temperature melting at usually 2000°C or more is possible.

There is no particular limitation to the methods for fiberizing the composition for preparing a fiber of the present invention. Thus, a conventional fiberization method such as a blowing method or a spinning method may be employed. In employing such a fiberization method, the viscosity range required of the composition for preparing a fiber is preferably 20-100 poise. Viscosity of a melt is a function of temperature and the corresponding composition ratio and thus that of a melt having the same composition ratio is dependent upon temperature. This affects the fiberization since if the temperature of a melt during the fiberization becomes higher, the viscosity decreases whereas if the fiberization temperature becomes lower, the viscosity increases. If the viscosity of the fiber composition at the fiberization temperature is too low, the produced fiber is too short and thin, and many fine unfiberized shots are generated, by which the fiberization yield becomes lower. If the viscosity is too high, fibers having a large diameter are formed and thick unfiberized shots are increased.

The ceramic fiber prepared from the composition for preparing a ceramic fiber of the present invention satisfies one or more of the properties, most preferably all of the properties of 1) an unfiberized shot content of 50 wt% or less, preferably 40 wt% or less, 2) an average fiber diameter of 2 to 6 $\mu$m, preferably 3 to 5 $\mu$m, 3) a thermal linear shrinkage (1260°C/for 24 hours) of 3% or less, preferably 2% or less, and 4) a solubility constant in an artificial body fluid of 200 ng/cm$^2$·hr or more, preferably 300 ng/cm$^2$·hr or more. Therefore, the ceramic fiber is particularly suitable for heat insulating material at high temperature and shows an excellent biosolubility. Furthermore, it can be produced easily by using conventional ceramic fiber production processes directly and thus provides an economical advantage.

## [EFFECT OF THE INVENTION]

According to the present invention, it is possible to obtain a biosoluble ceramic fiber particularly suitable for heat insulating material at high temperature because it can decrease the harmfulness to the human body since it has a remarkably improved solubility in an artificial body fluid as compared with conventional ceramic fibers and thus is easily removable when inhaled into the lungs of a human, and it has an excellent stability at high temperature and excellent mechanical properties such that the thermal linear shrinkage at 1260°C for 24 hours is less than 3% while overcoming the property deterioration at high temperature which is a problem of conventional biodegradable ceramic fibers.

**[BRIEF EXPLANATION OF THE DRAWINGS]**

Figure 1 is a phase equilibrium diagram of the three-component system of $SiO_2$-$Al_2O_3$-$CaO$.

**[CONCRETE EXPLANATION TO CARRY OUT THE INVENTION]**

The present invention is explained in more detail by the following examples and comparative examples. However, the scope of the present invention is not limited thereto.

**Examples 1 to 5 and Comparative Examples 1 to 5**

The compositions for ceramic fiber production were prepared with the ingredients and contents thereof as specified in Table 1 below by a melting process of electrically charging type using three-phase electrodes, and then ceramic fibers were produced from the compositions by a conventional process for producing RCF inorganic fibers. Comparative Example 1 represented a composition for producing a conventional RCF, Comparative Examples 2, 4 and 5 represented compositions for testing, and Comparative Example 3 was a composition for producing a product for 1,100°C.
For the produced ceramic fibers, the average fiber diameter, the unfiberized shot content and the production yield were calculated and determined, and the results are shown in Table 1 below. Examples 1, 2 and 4 are Reference Examples.

[Table 1]

| | Ingredients | Ref. Ex. 1 | Ref. Ex. 2 | Ex. 3 | Ref. Ex. 4 | Ex. 5 | Comp. Ex. 1 | Comp. Ex. 2 | Comp. Ex. 3 | Comp. Ex. 4 | Comp. Ex. 5 |
|---|---|---|---|---|---|---|---|---|---|---|---|
| Compositional ratio (wt%) | $SiO_2$ | 76.8 | 78.4 | 77.6 | 75.8 | 78.8 | 49.5 | 76.6 | 66.3 | 78.3 | 77.5 |
| | CaO | 13.7 | 12.5 | 11.2 | 13.1 | 10.8 | 0.0 | 16.7 | 26.5 | 12.6 | 13.1 |
| | MgO | 6.6 | 6.7 | 8.9 | 8.5 | 7.6 | 0.0 | 4.8 | 6.5 | 7.6 | 6.7 |
| | $Al_2O_3$ | 0.5 | 0.9 | 1.1 | 1.5 | 1.0 | 49.9 | 1.9 | 0.1 | 0.4 | 1.6 |
| | $B_2O_3$ | 0.2 | 0.2 | 0.4 | 0.5 | 0.9 | 0.0 | 0.0 | 0.5 | 0.5 | 0.5 |
| | $ZrO_2$ | 1.7 | 0.9 | 0.6 | 0.3 | 0.5 | 0.0 | 0.0 | 0.0 | 0.3 | 0.3 |
| | Impurities [1] | 0.5 | 0.4 | 0.2 | 0.3 | 0.4 | 0.6 | 0.0 | 0.1 | 0.3 | 0.3 |
| | Total | 100 | 100 | 100 | 100 | 100 | 100 | 100 | 100 | 100 | 100 |
| Average diameter ($\mu$m) | | 3.9 | 4.7 | 4.2 | 4.1 | 3.8 | 3.7 | 3.5 | 3.8 | 3.9 | 3.6 |
| Unfiberized shot content (wt%) | | 29.0 | 24.0 | 32.0 | 28.0 | 29.0 | 30.0 | 30.0 | 32.0 | 33.0 | 31.0 |
| Production yield (%) | | 72.0 | 75.0 | 73.0 | 75.0 | 76.0 | 80.0 | 75.0 | 72.0 | 68.0 | 74.0 |
| [1] Impurities: $Na_2O + Fe_2O_3 + TiO_2$ | | | | | | | | | | | |

[Determination and Calculation of Physical Properties]

- Average fiber diameter: The diameters of fibers were repeatedly measured more than 500 times with an electron microscope at a high magnification of 1,000X or more, and then the fiber average diameter was calculated therefrom.

- Unfiberized shot content: The unfiberized shot content was determined according to ASTM C892. That is, the ceramic fiber was thermally treated at 1260°C for 5 hours and then, about 10 g of specimen was precisely weighed at a degree of 0.0001 g precision ($W_0$). The specimen was put into a sieve of 30 mesh size and pressed with a rubber rod to pass through the 30-mesh sieve, and then 50-mesh sieve and 70-mesh sieve, subsequently. The weight ($W_1$) of particles remaining on each sieve was measured to calculate the unfiberized shot content ($W_s$) by using Equation 1 below:

$$W_s = \frac{W_1}{W_0} \times 100 \qquad [\text{Equation 1}]$$

wherein, $W_s$ represents the unfiberized shot content, $W_0$ represents the weight of initial particles and $W_1$ represents the weight of residue particles.

- Production yield: The production yield was calculated as a ratio of the total amount of the fiberized material to the total amount of the drained melt for a given time by using Equation 2 below:

$$\textit{Production yield (\%)} = \textit{[Total amount of fiberized material/hour]} \,/\, \textit{[Total amount of}$$

$$\textit{drained melt/hour]} \qquad [\text{Equation 2}]$$

In general, if fibers have a large average diameter and a coarse cross-section, they have problems of causing a tingling feel during handling as well as the reduction of the heat-insulating effect. However, the fibers produced according to the examples of the present invention were of high quality because they had a smaller average diameter of 3.8-4.7 $\mu$m as compared with 6 $\mu$m, which is the average diameter of commercial ceramic fibers as usually produced. Furthermore, because of the smaller average fiber diameter, the fibers produced therefrom are expected to exert a better heat-insulating effect.

Upon comparing the examples of the present invention with the comparative examples, the unfiberized shot contents of the examples of the present invention were 24-32 wt%, which were remarkably reduced values as compared with 30-36 wt% of the comparative examples 1, 2, 4 and 5 of conventional ceramic fibers.

In terms of the production yield, the examples of the present invention achieved production yields of 72-76 %, which was equal to or better than those of the conventional ceramic fibers of 70-80 %. The comparative example 4, which was a composition having high fiberization viscosity, showed a production yield lower than that of the comparative example 1 and lower than those of the examples.

From the above examples for fiberization, it has been confirmed that according to the present invention, ceramic fibers having an unfiberized shot content of 50 wt% or less and a fiber average diameter of 6 $\mu$m or less can be produced by using the existing facilities.

Next, for the ceramic fibers produced in the examples and the comparative examples, the thermal linear shrinkages (1260°C, for 24 hrs/168 hrs), melting temperatures, fiberization temperatures and solubility constants ($K_{dis}$) in the artificial body fluids were calculated and determined, and the results are shown in Table 2 below.

[Table 2]

| | Time | Ref. Ex. 1 | Ref. Ex. 2 | Ex. 3 | Ref. Ex. 4 | Ex. 5 | Comp. Ex. 1 | Comp. Ex 2 | Comp. Ex. 3 | Comp. Ex . 4 | Comp.Ex5 |
|---|---|---|---|---|---|---|---|---|---|---|---|
| 1260 °C Linear shrinkage (%) | 24 hrs | 1.6 | 1.3 | 1.5 | 1.9 | 1.6 | 1.3 | 5.9 | 4.8 | 5.9 | 5.3 |
| | 168 hrs | 2.5 | 2.2 | 2.8 | 2.4 | 2.3 | 2.1 | 7.8 | 6.0 | 7.8 | 7.2 |
| Melting temperature (°C) | | 1465 | 1420 | 1431 | 1410 | 1402 | 1460 | 1305 | 1310 | 1470 | 1352 |
| Fiberization temperature (°C) | | 1843 | 1861 | 1847 | 1830 | 1831 | 1835 | 1829 | 1814 | 1902 | 1841 |
| $K_{dis}$ | | 345 | 342 | 371 | 381 | 485 | 10 | 132 | 720 | 353 | 227 |

[Determination and Calculation of Physical Properties]

- Thermal linear shrinkage (variation of fiber length at high temperature): 220 g of fiber was sufficiently dispersed in an aqueous 0.2 % starch solution and the dispersed fiber was poured into a 300 x 200 mm mold, and then said fiber was leveled so as to have low surface deviation, and the mold was drained through its bottom to prepare a pad. The obtained pad was sufficiently dried in an oven at 50°C for more than 24 hours and cut into a size of 150 x 100 x 25 mm to prepare a test sample. The test sample was marked with highly refractory materials such as platinum, ceramic or the like, and the distances between the test marks were precisely measured by using vernier calipers. The test sample was then placed in a furnace, heated at 1260°C for 24 hours and 168 hours, and cooled slowly. For the cooled test sample, the distances between the test marks were measured to compare them with those before the thermal treatment. The thermal linear shrinkages were calculated by using Equation 3 below:

$$\textit{Thermal linear shrinkage } (\%) = \frac{(l_0 - l_1)}{l_0} \times 100 \qquad \text{[Equation 3]}$$

wherein, $l_0$ represents the initial distance (mm) between marks on the test sample, and $l_1$ represents the length (mm) between marks on the test sample after heating.

- Melting temperature: By utilizing a temperature gradient furnace capable of controlling the temperature distribution, the gradient was set within a temperature range of 1100-1500 °C. A ceramic fiber pad was prepared by the same method as that for measuring thermal linear shrinkage. The prepared pad was cut so as to have a size of 20 mm x 200 mm, and the cut pieces from the pad were kept within the temperature gradient furnace retained in a temperature range of 1100-1500°C for 24 hours. After this highly thermal treatment, the melt position was observed to indirectly determine the melting temperature.

- Fiberization temperature: A blowing method and a spinning method are used in the fiberization process by melting and fiberizing a composition for fiber production. The viscosity required of the composition in such processes is about 20-100 poises. In the present invention, the fiberization temperature is defined as a temperature of the composition necessary for retaining a viscosity of 20 poises. The fiberization temperature varies according to the composition, and the measurement was based on the viscosity of the ceramic fiber. Since the melt composition has a high temperature of 2000°C or more, the fiberization viscosity when draining it was indirectly converted. The fiberization viscosity was calculated as the viscosity ratio to the theoretical viscosity of the ceramic fiber by using Equation 4 below, from which the fiberization temperature was converted.

$$\frac{\eta_2}{\eta_1} = \frac{F_1 R_2^{2.5}}{F_2 R_1^{2.5}} \qquad \text{[Equation 4]}$$

wherein, $\eta_1$ represents a reference viscosity which is a theoretical viscosity of $Al_2O_3$-$SiO_2$ (RCF-AS)-based fiber composition of a conventional ceramic fiber product, $\eta_2$ represents a relative viscosity from which the viscosity of the examples and comparative examples were calculated, and the fiberization temperature was converted therefrom, and

$F_1$, $F_2$: Drained melt amount (kg) per hour

$R_1$, $R_2$: Effective radius (mm) of draining orifice

$$R = \text{Radius (mm) of orifice} - \tan 15° \times \{27.99 - \text{distance between orifice and needle}\} \text{(mm)}$$

- Solubility constant in an artificial body fluid (Kdis): In order to evaluate the biosolubility of the produced fiber, the solubility in an artificial body fluid was determined by the manner as explained below. In vivo biodegradability of ceramic fiber was evaluated based on the solubility in an artificial body fluid. After comparing the retention time in the body on the basis of said solubility, the solubility constant ($K_{dis}$) was calculated by using Equation 5 below:

$$K_{dis} = \frac{d_0 \rho \sqrt{1 - M / M_0}}{2t} \qquad \text{[Equation 5]}$$

wherein, $d_o$ means an initial average diameter of fiber ($\mu$m), $\rho$ represents an initial density of fiber (g/cm$^3$), $M_0$ represents an initial mass of fiber (mg), M represents a mass of residual fiber after dissolution (mg), and t represents time for test (hr).

A fiber to be tested was placed between thin layers of 0.2 $\mu$m polycarbonate membrane filters fixed with a plastic filter supporter, and an artificial body fluid was filtered through said filters to determine the dissolution rate. During the experiment, the artificial body fluid was controlled to retain a temperature of 37°C and a flow rate of 135 mL/day, and its pH was maintained at a range of 7.4 $\pm$ 0.1 by using a gas of $CO_2/N_2$ (5/95%).

In order to precisely determine the solubility of fiber for a long time, the fiber was leached for 21 days and the filtered artificial body fluid was analyzed with Inductively Coupled Plasma Spectrometry (ICP) to measure the amount of ions dissolved therein at given timings (1st, 4th, 7th, 11th, 14th and 21st days). From the results, the solubility constants ($K_{dis}$) thereof were determined by using the above Equation 5.

The artificial body fluid (Gamble Solution) used for measuring the dissolution rate of the fiber had the contents of ingredients (g/L) as shown in Table 3 below:

[Table 3]

| Ingredients | Content (g/L) |
| --- | --- |
| NaCl | 7.120 |
| $MgCl_2 \cdot 6H_2O$ | 0.212 |
| $CaCl_2 \cdot 2H_2O$ | 0.029 |
| $Na_2SO_4$ | 0.079 |
| $Na_2HPO_4$ | 0.148 |
| $NaHCO_3$ | 1.950 |
| Sodium tartrate$\cdot 2H_2O$ | 0.180 |
| Sodium citrate$\cdot 2H_2O$ | 0.152 |
| 90% Lactic acid | 0.156 |
| Glycine | 0.118 |
| Sodium pyruvate | 0.172 |

After the thermal treatment at 1260°C for 24 hours, the ceramic fibers of the examples 1-5 showed low thermal linear shrinkage less than 3.0 % (1.3-1.9 %) and even after the thermal treatment at the same temperature for 168 hours. Furthermore, even if heat-treating the fibers at the above temperature for 168 hours, they still showed low thermal linear shrinkage less than 3.0 % (2.2-2.8 %). On the contrary, the fibers of the comparative examples 2 to 5 showed rapid shrinkage. Furthermore, in the comparative examples 2, 3 and 5, the melting temperatures were reduced about 50-100°C or more, as compared with those of the examples.

This can be interpreted as the result of reduced heat resistance due to the presence of a eutectic point in the $SiO_2$-$Al_2O_3$-CaO system as explained above. Although the very homogenous mixing is possible in the preparation of ceramic fiber, a local non-homogenous compositional region may exist, and the possibility of existence of a eutectic region in the ceramic fiber increases depending on the existing amount of $SiO_2$, $Al_2O_3$ and CaO. Accordingly, the control of CaO and $Al_2O_3$ contents in the ingredients for the ceramic fiber is an important factor. From the above examples, it has found that the phenomena of heat-resistance reduction due to the existence of a eutectic point can be minimized when CaO content is controlled according to the present invention so as to be within 10-14 wt% and $Al_2O_3$ content is controlled to be within 0.5-1.5 wt% [i.e., the sum of CaO and $Al_2O_3$ contents is controlled to be within 10.5-15.5 wt%].

With regard to the fiberization temperature, all of the examples 1 to 5 showed equal levels to 1835°C of the comparative example 1 which was a conventional ceramic fiber. It is thought that these results were obtained because proper use of $Al_2O_3$ induced the dissolution of $SiO_2$ network structure and thus the possible increase of viscosity due to the increase of $SiO_2$ content was prevented. In the comparative example 4, the fiberization temperature was increased as compared with the examples. In this case, to retain the same viscosity, the melting temperature should be increased considerably. If not, the production yield was reduced as shown in the comparative example 4.

With regard to the solubility constant as a reference for the biodegradability, all of the examples 1 to 5 showed a level of 300 $ng/cm^2 \cdot hr$ or more and thus are regarded as having excellent biodegradability. Also, the example 5 showed the highest solubility constant (480 $ng/cm^2 \cdot hr$) because it contained a relatively large amount of $B_2O_3$ which is well known to highly contribute to biodegradability. On the contrary, the comparative example 1 as a conventional RCF showed a very low solubility constant. In the comparative examples 2 and 5, it is thought that the relatively high level of $Al_2O_3$ content of 1.6-1.9 wt% was a cause of the biodegradability reduction. It is also thought that the increase of $Al_2O_3$ content disturbed the ion exchange and dissolution of the network structure in the mechanism of ceramic fiber dissolution, and thus the solubility of the ceramic fiber was decreased. During the melting procedure at high temperature, $Al_2O_3$ performs a role of flux material to cut the bonds of $SiO_2$. However, in the fiberized product obtained through the melting/fiberization procedures, the bonds of $Al_2O_3$ and the bonds of $SiO_2$ included in the ceramic composition are reinforced to show the effect of suppressing the dissolution mechanism in a body fluid. The comparative example 3 showed the highest solubility constant. However, since it had a low level of $SiO_2$ content and a high level of CaO content, the maximum use temperature was restricted to 1100°C and the shrinkage at 1260°C was higher than the acceptable limit.

As explained above through the examples and the comparative examples, the ceramic fiber according to the present invention has excellent biodegradability in an artificial body fluid, excellent fiberization property and high productivity due to its high fiberization yield. Furthermore, the ceramic fiber according to the present invention is useful as a heat insulating material at high temperature because the variation of thermal linear shrinkage is small in spite of thermal treatment at 1260°C for 24 hours.

**Claims**

1.  A composition for preparing a biosoluble ceramic fiber for heat insulating material at high temperature, comprising 75-80 wt% of $SiO_2$, 10-12 wt% of CaO, 4-9 wt% of MgO, 0.1-2 wt% of $ZrO_2$, 0.7-1.5 wt% of $Al_2O_3$ and 0.1-1.5 wt% of $B_2O_3$.

2.  A biosoluble ceramic fiber for heat insulating material at high temperature which is prepared from the composition for preparing a ceramic fiber according to claim 1 and satisfies one or more of the following properties 1) to 4):

    1) an unfiberized shot content of 50 wt% or less,
    2) an average fiber diameter of 6 $\mu$m or less,
    3) a thermal linear shrinkage (1260°C/for 24 hours) of 3% or less and
    4) a solubility constant in an artificial body fluid of 200 $ng/cm^2 \cdot hr$ or more.

3.  The biosoluble ceramic fiber according to claim 2 which satisfies all of said properties 1) to 4).

4.  The biosoluble ceramic fiber according to claim 2 which is fiberized by a blowing method or a spinning method.

5.  A heat insulating material comprising the biosoluble ceramic fiber according to claim 2.

**Patentansprüche**

1.  Zusammensetzung zum Herstellen einer biolöslichen keramischen Faser für ein Wärmeisolationsmaterial bei hoher Temperatur, umfassend 75-80 Gew.-% $SiO_2$, 10-12 Gew.-% CaO, 4-9 Gew.-% MgO, 0,1-2 Gew.-% $ZrO_2$, 0,7-1,5 Gew.-% $Al_2O_3$ und 0,1-1,5 Gew.-% $B_2O_3$.

2.  Biolösliche keramische Faser für ein Wärmeisolationsmaterial bei hoher Temperatur, die aus der Zusammensetzung zum Herstellen einer keramischen Faser nach Anspruch 1 hergestellt ist und eine oder mehrere der folgenden Eigenschaften 1) bis 4) erfüllt:

    1) einen unzerfaserten Schussgehalt von 50 Gew.-% oder weniger,
    2) einen durchschnittlichen Faserdurchmesser von 6 $\mu$m oder weniger,
    3) eine thermische lineare Schrumpfung (1260 °C/für 24 Stunden) von 3 % oder weniger und
    4) eine Löslichkeitskonstante in einem künstlichen Körperfluid von 200 $ng/cm^2 \cdot h$ oder mehr.

**3.** Biolösliche keramische Faser nach Anspruch 2, die alle der Eigenschaften 1) bis 4) erfüllt.

**4.** Biolösliche keramische Faser nach Anspruch 2, die durch ein Blasverfahren oder ein Spinnverfahren zerfasert ist.

**5.** Wärmeisolationsmaterial, umfassend die biolösliche keramische Faser nach Anspruch 2.


**Revendications**

**1.** Composition destinée à préparer une fibre céramique biosoluble destinée à un matériau isolant vis-à-vis de la chaleur à température élevée, comprenant entre 75 % et 80 % en poids de $SiO_2$, entre 10 % et 12 % en poids de CaO, entre 4 % et 9 % en poids de MgO, entre 0,1 et 2 % en poids de $ZrO_2$, entre 0,7 % et 1,5 % en poids d'$Al_2O_3$ et entre 0,1 % et 1,5 % en poids de $B_2O_3$.

**2.** Fibre céramique biosoluble destinée à un matériau isolant vis-à-vis de la chaleur à température élevée, qui est préparée à partir de la composition destinée à préparer une fibre céramique selon la revendication 1, et qui satisfait à une ou à plusieurs des propriétés suivantes 1) à 4) :

1) une teneur en poids non défibrée, égale ou inférieure à 50 % en poids ;
2) un diamètre moyen de fibre, égal ou inférieur à 6 $\mu$m ;
3) un rétrécissement linéaire thermique (à 1260°C /pendant 24 heures), égal ou inférieur à 3% ; et
4) une constante de solubilité dans un fluide corporel artificiel, égale ou supérieure à 200 ng / $cm^2 \cdot$ heure.

**3.** Fibre céramique biosoluble selon la revendication 2, qui satisfait à toutes lesdites propriétés 1) à 4).

**4.** Fibre céramique biosoluble selon la revendication 2, qui est défibrée par un procédé de soufflage ou par un procédé de filature.

**5.** Matériau isolant vis-à-vis de la chaleur qui comprend la fibre céramique biosoluble selon la revendication 2.

[FIGURE 1]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2873197 A
- US 4555492 A
- US 4055434 A
- US 3687850 A
- US 4604097 A
- WO 9207801 A
- US 5055428 A
- EP 1939148 A1
- US 2003162019 A1